Europäisches Patentamt

European Patent Office

Office européen des brevets

(11) Publication number: **0 439 787 A1**

# EUROPEAN PATENT APPLICATION

(21) Application number: **90124743.7**

(22) Date of filing: **19.12.90**

(51) Int. Cl.⁵: **B65G 23/08**

(30) Priority: **02.02.90 IT 8410790**

(43) Date of publication of application:
**07.08.91 Bulletin 91/32**

(84) Designated Contracting States:
**AT BE CH DE DK ES FR GB GR IT LI LU NL SE**

(71) Applicant: **OFFICINE RIUNITE-UDINE**
**Via S. Caterina, 35**
**I-33030 Basaldella di Campoformido,**
**Udine(IT)**

(72) Inventor: **Marcon, Gerardo**
**Via S. Giovanni, 33**
**Basaldella di Campoformido, Udine(IT)**
Inventor: **Zaccaron, Roberto**
**Via S. Giacomo, 41**
**Camino di Buttrio, Udine(IT)**

(74) Representative: **Piovesana, Paolo**
**Corso del Popolo, 70**
**I-30172 Venezia-Mestre(IT)**

(54) **Power roller for driving conveyor belts.**

(57) A power roller for driving conveyor belts, characterised by comprising a drum (1,11) which internally houses:

- a ring gear (2,12) rigid with the surface of said drum;
- an electric motor (3,13) the stator casing (4,14) of which is rigidly connected to a pin (5,15) for its support in a rotation-preventing manner by an external structure;
- a torque limiting coupling (19,,19) having its input side connected to the rotor (15,15) of said electric motor (3,13) and its output side connected to the input side (21,11) of a reduc-

tion gear system (9,19,22,13,23,12,24,14)), the output side of which is connected to the ring gear (2,12) of said drum (1,11);
- a box (11,11) housing said coupling (19,19) and rigid with the other pin (12,12) for its support in a rotation-preventing manner by the external structure;

the assembly formed by the stator casing (4,14), the box (11.11) housing the coupling (19,19) and the casing (9,19) of the reduction gear system forming an assembly or rigid elements which creates structural continuity between said pins (5,15,12,12).

FIG.1

This invention relates to a power roller for driving conveyor belts.

Power rollers, ie rollers provided with an internal electric motor for its rotation, are known for driving conveyor belts. Their purpose is to tension and move the conveyor belt, and compared with traditional rollers driven by an external electric motor they have the advantage of being of smaller overall size and less dangerous because of total protection of the moving parts.

Known power rollers generally comprise an outer cylindrical casing provided at its ends with two endpieces from which two axial pins emerge for fixing to an external structure. When the electric motor housed within the casing is powered it rotates said casing about the pins to thus drive the conveyor belt which passes about it.

As the stresses involved are very high, a reduction gear is generally interposed between the motor and the cylindrical casing of the power roller the purpose of which is to provide a torque at the casing axis which is much higher than that avilable at the motor axis, which is necessarily limited because of the limited motor dimensions.

These known power rollers have the drawback of comprising a rigid connection between the motor and casing, which means that on the one hand the conveyor belt cannot be started gradually and on the other hand the motor can be subjected to excessive stress if, as frequently happens, the conveyor belt jams for accidental external causes.

Known externally driven rollers do not however generally suffer from the stated drawback in that the belt transmission system between the external motor and the reduction gear itself forms a torque limiter and in addition if it is considered necessary to still use a clutch member this can be installed practically without space restrictions. However as stated they have other drawbacks due to the presence of external moving parts.

Up to the present time it has not been possible to fit a clutch member to a power roller, both because of the small space available within the casing and because of the interruption in the mechanical structural continuity which this would inevitably produce between the two support pins and which would be incompatible with the very high stresses deriving from the conveyor belt. In this respect, this latter can be of considerable length and weight, and to prevent possible slippage on the surface of the drive roller must be kept under considerable tension, with inevitable high flexural stressing of the power roller shaft.

The problem therefore exists of providing a power roller which, while preserving all the merits of traditional . power rollers compared with externally driven rollers, obviates all the drawbacks of such traditional power rollers, due essentially to the lack of a coupling between the motor and the outer casing.

This problem is solved according to the invention by a power roller for driving conveyor belts as described in claim 1.

Two preferred embodiments of the present invention are described hereinafter with reference to the accompanying drawings in which:

Figure 1    is a partly sectional isometric view of a first embodiment of a power roller according to the invention;

Figure 2    is a longitudinal section therethrough; and

Figure 3    shows a different embodiment thereof in the same view as figure 2.

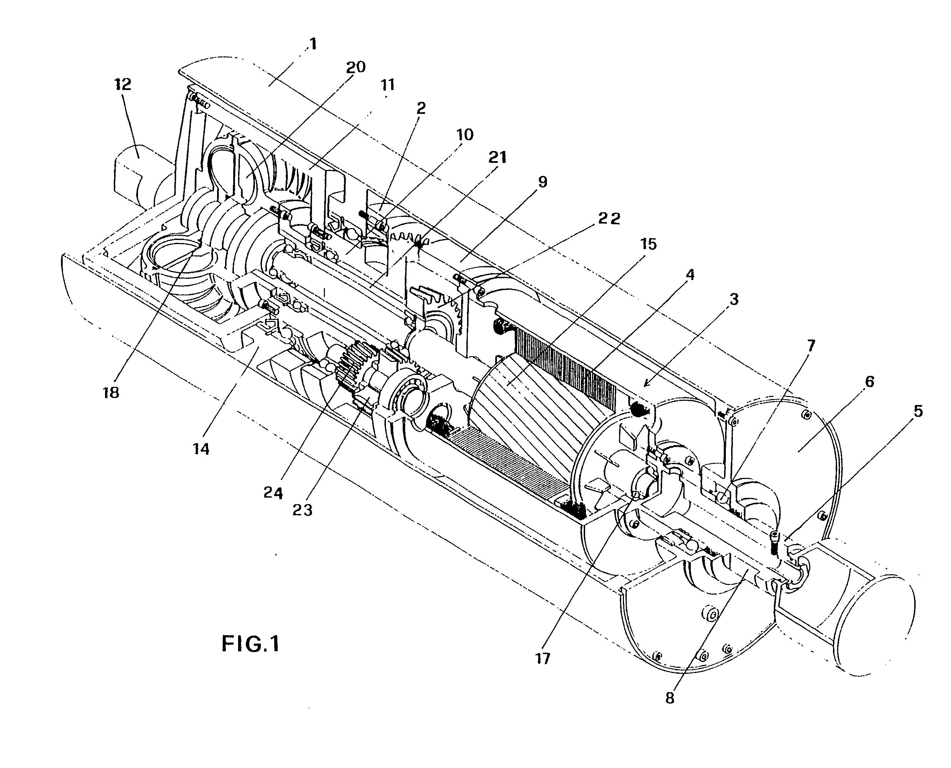

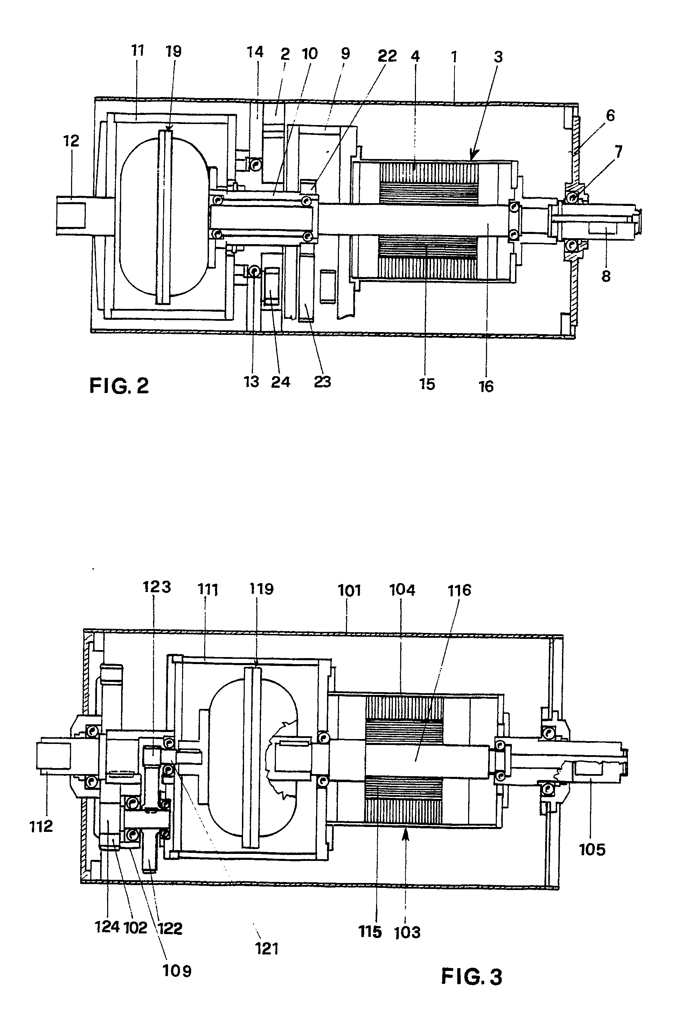

As can be seen from the drawings, the power roller according to the invention comprises, in the embodiment shown in Figures 1 and 2, a drum 1 to which a traditional conveyor belt (not shown on the drawings) to be driven adheres externally. A ring gear 2 is rigid with the inner surface of the drum 1.

In the interior of the drum 1 there is housed an electric motor 3, the stator casing 4 of which is rigid with a pin 5 passing through an endpiece 6 of the drum 1 at a bearing 7. The pin 5 is provided with two flattened portions 8 in two diametrically opposing positions to prevent it rotating about its supports provided in the external structure (not shown).

The stator casing 4 of the electric motor 3 is fixed to a first substantially cylindrical box 9 connected by an axial sleeve 10 to a second cylindrical box 11 to which the other pin 12 of the power roller, identical to the pin 5 is fixed.

The structure formed by the pin 5, the stator casing 4, the first cylindrical box 9, the sleeve 10, the second cylindrical box 11 and the pin 12 presents structural continuity and supports the drum 1 via the bearing 7 and a further bearing 13 interposed between the sleeve 10 and a circular sector 14 which is rigid with said drum 1 and to which the ring gear 2 is applied.

The shaft 16 of the rotor 15 is supported at one end by the stator casing via a bearing 17 and extends at the other end through the sleeve 10 to the drive wheel 18 of a hydraulic coupling 19, the driven wheel 20 of which is rigid with a sleeve 21 coaxially interposed between the sleeve 10 and shaft 16.

On that end of the sleeve 21 distant from the wheel 20 there is fixed a gear wheel 22 which engages a gear wheel 23 supported by the cylindrical box 9. With the gear wheel 23 there rigidly rotates a third gear wheel 24 which engages the ring gear 2 of the drum 1.

The power roller according to the invention constructed in this manner is supported by an external structure, not shown, via the pins 5 and 12, which are unable to rotate relative to said structure.

When the electric motor 3 is powered, the rotor 15 via the shaft 16 rotates the wheel 18, which rotates the wheel 20 of the hydraulic coupling 19, and with this the drum 1 via the gear wheel 22, the gear wheel 23, the gear wheel 24 and the ring gear 2.

Basically, powering the electric motor 3 causes the drum 1 to rotate via a linkage including the hydraulic coupling 19, which provides gradual starting and torque limiting.

The power roller according to the invention therefore differs from traditional power rollers in that without any increase in overall size it offers the possibility of incorporating a hydraulic coupling while at the same time preserving structural continuity of the assembly, which is normally interrupted by such a coupling.

In addition the particular embodiment illustrated provides the advantage of having this hydraulic coupling positioned at one end of the drum 1 and hence in a region which allows easy maintenance of the coupling and rapid dissipation of the heat generated within it during operation.

In the embodiment schematically illustrated in Figure 3, the hydraulic coupling 119 is disposed within the drum 101 in an axial position between the reduction gear system 109 and the electric motor 103. Specifically, in this type of embodiment the cylindrical box 111 housing the hydraulic coupling 119 in its interior is made rigid with the stator casing 104 of the electric motor 103, which is itself rigid with a pin 105 for support on an external structure.

To the cylindrical box 111 there is also fixed the casing 109 of the reduction gear system, on which there is mounted a first gear wheel 122 which engages a second gear wheel 123 fixed on the output shaft 121 of the coupling 119 and of smaller diameter, and a third gear wheel 124 of smaller diameter rotating rigidly with the first gear wheel 122 and engaging the ring gear 102, which rotates rigidly with the drum 101.

The other pin 12 is fixed to the casing 109 to support the power roller on the external structure.

The structural continuity of the power roller is provided by the rigid connection between the two pins 105 via the stator casing 104, the cylindrical box 111 and the casing 109 of the reduction gear system.

When the electric motor 103 is powered the stator casing 104 is locked relative to the external structure, whereas the shaft 116 of the rotor 115 rotates the shaft 121 via the hydraulic coupling 119. The shaft 121 then rotates the drum via the toothed engagement between the gears 123, 122, 124 and the ring gear 102. Thus again in this case between the motor 103 and reduction gear system 109 a hydraulic coupling 119 is provided to act as a gradual starter and torque limiter, without interrupting the structural continuity of the assembly.

This type of embodiment appers more simple than the preceding from the constructional aspect, but at the same time requires the hydraulic coupling 119 to be positioned in the interior of the drum 1 in an intermediate position between the electric motor 103 and the reduction gear system 109, thus limiting the use of the power roller to those cases in which prolonged operation is not required, and which could involve problems of heat dissipation and/or frequent coupling maintenance.

## Claims

1. A power roller for driving conveyor belts, characterised by comprising a drum (1,101) which internally houses:
   - a ring gear (2,102) rigid with the surface of said drum;
   - an electric motor (3,103) the stator casing (4,104) of which is rigidly connected to a pin (5,105) for its support in a rotation-preventing manner by an external structure;
   - a torque limiting coupling (19,,119) having its input side connected to the rotor (15,115) of said electric motor (3,103) and its output side connected to the input side (21,121) of a reduction gear system (9,19,22,123,23,122,24,124), the output side of which is connected to the ring gear (2,102) of said drum (1,101);
   - a box (11,111) housing said coupling (19,119) and rigid with the other pin (12,112) for its support in a rotation-preventing manner by the external structure;
   the assembly formed by the stator casing (4,104), the box (11,111) housing the coupling (19,119) and the casing (9,109) of the reduction gear system forming an assembly of rigid elements which creates structural continuity between said pins (5,105,12,112).

2. A power roller as claimed in claim 1, characterised in that the torque limiting coupling (19,119) is of hydraulic type.

3. A power roller as claimed in claim 1, characterised in that the coupling (119) is housed in the interior of the drum (101) between the electric motor (103) and the reduction gear system (122,123,124).

4. A power roller as claimed in claim 1, characterised in that the coupling (19) is positioned at one end of the interior of the drum (1) and is connected to the electric motor (3) and to the reduction gear system (9,19,22,23,24) by two coaxial shafts (16,21).

5. A power roller as claimed in claim 1, characterised by comprising a drum (1) which internally houses:
   - a ring gear (2) rigid with said drum (1);
   - an electric motor (3) positioned at one end of said drum and having its stator casing (4) emerging from an endpiece (6) of the drum (1) to support said power roller on an external structure, a shaft (16) from the rotor (15) emerging from said stator casing;
   - a reduction gear system, the casing (9) of which is rigidly fixed to said stator casing (4) and is traversed by the rotor shaft (16) which is connected to the input shaft of a hydraulic coupling (19) and fixedly carrying the input gear wheel (22) of the reduction gear system, the output gear wheel (24) engaging with said ring gear (2);
   - a reduction gear system, the casing (9) of which is rigidly fixed to said stator casing (4) and is traversed by the rotor shaft (16) which is connected to the input shaft of a hydraulic coupling (19) which is positioned at one end of said drum (1) and has its output shaft (21) disposed coaxially but externally to said input shaft (16) and fixedly carrying the input gear wheel (22) of the reduction gear system, the output gear wheel (24) engaging with said ring gear (2);
   - a cylindrical box (11) internally housing said hydraulic coupling (19) and rigid on one side with the other pin (12) of the power roller, and on the other side with the casing (9) of the reduction gear system via a sleeve (10) coaxial to the input shaft (16) and output shaft (21) of said coupling (19).

6. A power roller as claimed in claim 5, characterised in that the drum 1 is supported by the assembly comprising the pin (5), the electric motor (3), the reduction gear system (9), the cylindrical box (11) and the pin (12) via two bearings (7,13), the first (7) being interposed between the pin (5) and an endpiece (6) of the drum (1), and the second (13) between the sleeve (10) and a wall (14) rigid with the interior of the drum.

FIG.1

EP 0 439 787 A1

FIG. 2

FIG. 3

7

## DOCUMENTS CONSIDERED TO BE RELEVANT

EP 90124743.7

| Category | Citation of document with indication, where appropriate, of relevant passages | Relevant to claim | CLASSIFICATION OF THE APPLICATION (Int. Cl.5) |
|---|---|---|---|
| X | <u>GB - A - 2 032 703</u> (DOWTY MECO) * Totality * | 1,2 | B 65 G 23/08 |
| A | ---- | 4-6 | |

TECHNICAL FIELDS SEARCHED (Int. Cl.5)

B 65 G
H 02 K

The present search report has been drawn up for all claims

| Place of search | Date of completion of the search | Examiner |
|---|---|---|
| VIENNA | 13-02-1991 | BAUMGARTNER |

EPO FORM 1503 03.82 (P0401)